# EUROPEAN PATENT SPECIFICATION

(11) **EP 0 734 765 B1**
(45) Date of publication and mention of the grant of the patent: **01.03.2000**
(21) Application number: 96302018.5
(22) Date of filing: 25.03.1996
(51) Int. Cl.: B01J 25/02, B01J 25/00

(54) **Method for preparing a modified raney catalyst**
Verfahren zur Herstellung eines modifiziertes Raney-Katalysators
Méthode pour préparer un catalyseur raney modifié

(30) Priority: 28.03.1995 JP 6972095
(43) Date of publication of application: 02.10.1996
(73) Proprietor: MITSUI CHEMICALS, INC., Tokyo (JP)
(72) Inventor: Yamauchi, Isamu, Suita-shi, Osaka (JP); Asao, Koichi, Takaishi-shi, Osaka (JP); Matsuoka, Osamu, Yokohama-shi, Kanagawa-ken (JP); Ohnaka, Itsuo, Toyonaka-shi, Osaka (JP); Kambara, Yoshihiko, Takaishi-shi, Osaka (JP)
(74) Representative: Stuart, Ian Alexander

(56) References cited:
- EP-A- 0 043 309
- EP-A- 0 091 027
- GB-A- 1 343 289
- GB-A- 2 025 251

## Description

The present invention relates to a Raney catalyst and a method for preparing the same.

A Raney catalyst can be prepared by forming an alloy of metals having a catalytic function, for example, one metal selected from the group consisting of Ni, Co, Fe, Cu, Pd and Ag and metallic Al which can be attacked with water, an alkali, an acid or the like by a casting method or a quenching method, and then leaching part or most of the Al with an attacking agent such as water, an alkali or an acid.

It has been reported that, particularly in the alloy formed by the quenching method, there characteristically appears a metastable phase which cannot be obtained by the casting method, and the activity of the Raney catalyst obtained by leaching the alloy of the quenching method is higher than that of the Raney catalyst obtained by leaching the alloy of the casting method.

Additionally, in order to further heighten the catalytic activity, it has also been carried out to add metals having a catalytic function, for example, Ni, Co, Fe, Cu, Pd, Ag and other metals as modifying components, but in the casting method, these modifying components are gradually segregated during slow cooling, so that the uniform dispersion of the components is often disturbed. For this reason, the improvement of the activity due to the addition of these components is not so large, and the activity improvement is often uneven.

On the other hand, in the quenching method, the metals liquefied at a high temperature are frozen, and therefore the modifying components can be successfully dispersed, with the result that a modification effect can be obtained with a good reproducibility. In this respect, the quenching method is better than the casting method.

In both the casting method and the quenching method, however, the alloy components are required to be liquefied once at a high temperature. For this reason, the kinds of alloys and the range of composition are restricted, and such a restriction stands in the way of the creation of the Raney catalyst having a higher performance.

As an alloy manufacturing method to which the above-mentioned restriction is not subject, a mechanical alloying method has been suggested. In this method, powders of pure metals are mixed so as to become a desired alloy composition, and the mixed powder is then continuously subjected to mechanically forced processing and forced mixing for a long period of time by the use of a ball mill or another grinding mill to obtain an alloy having a wide composition range.

A preparation method of the Raney catalyst, which comprises a step of forming a Raney alloy comprising two components by the mechanical alloying method and a step of leaching the alloy, has been described in, for example, "Solid State Ionics", Vol. 60, p. 299-304 (1993). The catalyst obtained via the mechanical alloying method can exert a higher activity than via the casting method, but this activity is still poor. Thus, a Raney alloy having a further high activity and a high selectivity has been desired.

Preferred embodiments of the invention may provide a Raney catalyst having a high activity and a high selectivity, and a method for preparing the same.

The first aspect of the present invention is directed to a method for preparing a modified Raney catalyst which comprises the steps of forming, by a mechanical alloying method, a Raney alloy represented by the formula Al-Me-X, wherein Me is one metal selected from the group consisting of Ni, Co, Fe, Cu, Pd and Ag; and X is different from Me and is at least one metal selected from the group consisting of Ag, Co, Pt, Ti, V, Cr, Fe, Cu, Zn, Ge, W, Re, Os, Ir, Au, Zr, Nb, Mo, Ru, Rh, Pd, Cd, In, Sn and Sb, and then leaching the Raney alloy.

The second aspect of the present invention is directed to the method for preparing the modified Raney catalyst represented by the formula Al-Me-X wherein Me is Cu or Ni, and X is different from Me and is at least one metal selected from the group consisting of Co, Pd, Ti, V and Cu.

The third aspect of the present invention is directed to a method for hydrogenating a carbonyl compound which comprises a step of using the modified Raney catalyst.

The fourth aspect of the present invention is directed to the method for hydrogenating a carbonyl compound wherein Me of the modified Raney catalyst is Ni, and X is Co and/or Ti.

The fifth aspect of the present invention is directed to a method for hydrating a nitrile which comprises a step of using the modified Raney catalyst.

The sixth aspect of the present invention is directed to the method for hydrating a nitrile wherein Me of the modified Raney catalyst is Cu, and X is Co and/or Ti.

The seventh aspect of the present invention is directed to a method for dehydrogenating an alcohol which comprises a step of using the modified Raney catalyst.

The eighth aspect of the present invention is directed to the method for dehydrogenating an alcohol wherein Me of the modified Raney catalyst is Cu or Ni, and X is different from Me and it is at least one metal selected from the group consisting of Pd, Ti, V and Cu.

According to the present invention, a modified Raney catalyst having a high activity and a high selectivity can be prepared by forming, by a mechanical alloying method, a Raney alloy comprising three components or four or more components represented by the formula Al-Me-X wherein Me is one metal selected from the group consisting of Ni, Co, Fe, Cu, Pd and Ag; and X is different from Me and is at least one metal selected from the group consisting of Ag, Co, Pt, Ti, V, Cr, Fe, Cu, Zn, Ge, W, Re, Os, Ir, Au, Zr, Nb, Mo, Ru, Rh, Pd, Cd, In, Sn and Sb, and then leaching the Raney alloy.

### DESCRIPTION OF THE PREFERRED EMBODIMENTS

The composition of a Raney alloy represented by the formula Al-Me-X regarding the present invention will be described. The amount of a metal represented by Me in the formula is usually in the range of from 20 to 45 atom%, preferably from 25 to 40 atom% with respect to the amount of Al.

The amount of at least one metal represented by X in the formula is usually in the range of from 0.5 to 5 atom%, preferably 1 to 3 atom% with respect to the amount of Me.

No particular restriction is put on the particle size of each metal powder used as the material of the alloy, but it is usually in the range of from 50 to 150 mesh (i.e. capable of passing through a sieve whose openings are about 0.3-0.1mm).

As the metal powder which is the material of the alloy, a Raney catalyst or a modified Raney catalyst which has already been used in a reaction can be employed. In this case, a supplementary metal powder can be added to the material to obtain a desired alloy composition.

No particular restriction is put on a mechanical alloying method, and a usual method can be applied as it is. That is to say, the metal powders which are the materials of the alloy are mixed so as to form a desired alloy composition, and the mixed powder is then continuously subjected to mechanically forced processing and forced mixing for a long period of time by the use of a ball mill or another grinding mill to obtain the Raney alloy. Alternatively, alloy masses may be formed by a usual casting method and then ground, and the ground alloy powder may be next continuously subjected to mechanically forced processing and forced mixing for a long period of time by the use of a ball mill or another grinding mill to obtain the Raney alloy. Furthermore, an alloy powder formed by a spray method may be continuously subjected to mechanically forced processing and forced mixing for a long period of time by the use of a ball mill or another grinding mill to obtain the Raney alloy. When an active element is used, it can be treated in an inactive atmosphere, as needed.

No particular restriction is put on a developing method in which the obtained Raney alloy is leached with an attacking agent to form a Raney catalyst, and a usual developing method can be applied as it is. That is to say, part or most of Al is eliminated from the Raney alloy by virtue of an attacking agent such as water, an alkali or an acid to prepare the Raney catalyst. More concretely, a 20 to 25% aqueous caustic soda solution is prepared usually 1.3 to 15 times the amount of the Raney alloy, and the alloy powder is then poured little by little into the aqueous caustic soda solution with sufficient stirring while the temperature of the solution is maintained at 50 to 60°C. After the pouring of the alloy powder, reaction is carried out at 50 to 100°C for a period of 30 to 120 minutes to eliminate part or most of Al from the powder, followed by washing with water. The water washing is usually carried out by decantation. In this decantation, pure water is used in an amount 8 to 10 times that of the alloy, and the water washing is done until the pH of a wash liquid reaches 8 to 9, thereby preparing the Raney catalyst.

The modified Raney catalyst obtained by the method of the present invention can be used in every reaction to which a Raney catalyst obtained by a conventional casting method or quenching method can be applied.

Typical examples of the usable reaction include a hydrogen reduction reaction of an organic compound such as an olefin, an acetylene, a nitrile, an oxime, an imino compound, an aromatic compound, a heteroaromatic compound, a nitro compound, a nitroso compound or a carbonyl compound; a hydrogenolysis reaction of an ester, an amine, an organic sulfur compound or an organic halide; a hydration reaction of a nitrile; and a dehydrogenation reaction of an alcohol.

No particular restriction is put on the kinds of carbonyl compounds, but typical examples of the carbonyl compounds include ketones such as acetone, methyl ethyl ketone and acetophenone, and aldehydes such as acetaldehyde, crotonaldehyde and benzaldehyde.

No particular restriction is put on the kinds of nitriles, but typical examples of the nitriles include acetonitrile, propionitrile, acrylonitrile, methacrylonitrile and benzonitrile.

No particular restriction is put on the kinds of alcohols, but typical examples of the alcohols include methanol, ethanol, isopropyl alcohol, n-butyl alcohol, isobutyl alcohol and benzyl alcohol.

The reaction can be carried out in any of a liquid phase, a gaseous phase or a gas-liquid mixing phase, but a person skilled in the art can select the suitable reaction phase in compliance with the reaction materials and physical properties such as the boiling point, vapor pressure and heat stability of a reaction product in consideration of reaction conditions for the use of the Raney catalyst obtained by the conventional casting method or quenching method.

The reaction can be carried out usually at ordinary temperature or more, but the person skilled in the art can select the suitable reaction temperature in compliance with the reaction materials, physical properties such as the boiling point, vapor pressure and heat stability of the reaction product and the reactivity of the materials in consideration of the reaction conditions for the use of the Raney catalyst obtained by the conventional casting method or quenching method.

No particular restriction is put on the composition ratio of the reaction materials, but the person skilled in the art can select the suitable composition ratio in consideration of the reaction conditions for the use of the Raney catalyst obtained by the conventional casting method or quenching method.

As reaction pressure, any of reduced pressure, atmospheric pressure and increased pressure can be used, but the person skilled in the art can select the suitable reaction pressure in consideration of the reaction conditions for the use of the Raney catalyst obtained by the conventional casting method or quenching method.

No particular restriction is put on the amount of the catalyst to be used, but the person skilled in the art can select the suitable amount of the catalyst in consideration of the reaction conditions for the use of the Raney catalyst obtained by the conventional casting method or quenching method.

The modified Raney catalyst obtained by the method of the present invention can have much higher activity as compared with a modified Raney catalyst obtained by leaching, with an attacking agent, a Raney alloy comprising three components or four or more components obtained by the conventional casting method or quenching method.

For example, if the comparison of the catalytic activity is made on the basis of the hydrogen reduction reaction of a carbonyl compound, more concretely a hydrogenation velocity in the hydrogen reduction reaction of acetone, the activity of a modified Raney catalyst, which is obtained by forming a three-component Raney alloy represented by Al-Ni-Co in accordance with the casting method and then leaching the formed Raney alloy, is not so different from that of a Raney catalyst which is obtained by forming a two-component Raney alloy represented by Al-Ni in accordance with the casting method and then leaching the formed Raney alloy. Furthermore, the activity of a modified Raney catalyst, which is obtained by forming a three-component Raney alloy represented by Al-Ni-Co or Al-Ni-Ti in accordance with the quenching method and then leaching the formed Raney alloy, is not so different from that of a modified Raney catalyst which is obtained by forming a two-component Raney alloy represented by Al-Ni in accordance with the quenching method and then leaching the formed Raney alloy. Contrary to expectations, however, the activity of a modified Raney catalyst, which is obtained by forming a three-component Raney alloy represented by Al-Ni-Co or Al-Ni-Ti in accordance with the mechanical alloying method and then leaching the formed Raney alloy, is twice or thrice as great as that of a modified Raney catalyst which is obtained by forming a two-component Raney alloy represented by Al-Ni in accordance with the mechanical alloying method and then leaching the formed Raney alloy.

That is to say, the method of the present invention is characterized by applying the mechanical alloying method, which is the preparation method of the two-component Raney alloy represented by Al-Me, to the preparation method of the Raney alloy comprising three components or four or more components represented by Al-Me-X, and the addition effect of the X component is so high that it cannot be anticipated at all from the conventional catalyst obtained by the casting method or the quenching method.

The reason is not definite, but it can be presumed that the X-ray diffraction pattern of the three-component Raney alloy represented by Al-Ni-Co depends upon the preparation method (the casting method, the quenching method or the mechanical alloying method), and therefore in the mechanical alloying method, there would be formed a three-component amorphous phase or a novel non-equivalent crystalline phase which can be formed neither by the casting method nor by the quenching method, which fact would lead to the above-mentioned remarkable effect.

Accordingly, when the catalyst obtained by the method of the present invention is used, the reaction can be carried out under more moderate conditions than when the conventional modified Raney catalyst obtained by the casting method or the quenching method is used. In other words, comparing the catalyst of the present invention with the conventional catalyst, the catalyst of the present invention can be used in a less amount than the conventional catalyst to obtain the same results under the same conditions.

Next, the present invention will be described in more detail with reference to examples. However, the scope of the present invention should not by any means be limited to these examples.

### Example 1 Al-Ni-Co (Mechanical alloying method)

Al, Ni and Co metal powders were placed in a stainless steel ball mill so that the atomic ratio of Al, Ni and Co was 74:24:2, and after the mill was purged with argon, the mill was set in a freezer mill and then vibrated for 24 hours to obtain a Raney alloy powder of the mechanical alloying method. Afterward, the alloy powder was poured little by little into a 20% aqueous caustic soda solution over a period of 30 minutes to develop the powder. At this time, the amount of the 20% aqueous caustic soda solution was 13 times that of the alloy powder. During the development, the temperature of the solution was maintained at 60°C under a nitrogen gas stream. After the development, water washing was carried out by a decantation method using pure water until the pH of a wash liquid reached 9, thereby obtaining a modified Raney catalyst of the mechanical alloying method.

The catalytic activity of the thus obtained catalyst was evaluated on the basis of the hydrogenation activity of acetone. One part by weight of the catalyst and 27 parts by weight of acetone were placed in an autoclave, and the autoclave was then purged with nitrogen. Next, the solution was heated up to reaction temperatures (40, 50 and 60°C), and after purging with hydrogen, hydrogen was fed under pressure (3 MPa) and reaction was carried out with stirring. At this time, a reaction rate was measured on the basis of the decrease in the pressure with the consumption of hydrogen. The catalytic activity was evaluated on the basis of the reaction rate (-MPa/sec) under a hydrogen pressure of 3 MPa. The results are shown in Table 1.

### Example 2 Al-Ni-Ti (Mechanical alloying method)

The same procedure as in Example 1 was repeated except that the Co metal powder was replaced with Ti metal powder, thereby preparing a modified Raney catalyst of a mechanical alloying method, and the hydrogenation activity of acetone was then evaluated. The results are shown in Table 1.

### Comparative Example 1 Al-Ni-Co (Quenching method)

Small masses of Al, Ni and Co metals were placed in a Tammann tube so that the atomic ratio of Al, Ni and Co was 74:24:2, and the tube containing these metals was then put in a high-frequency melting furnace. Next, the furnace was purged with argon, and the metals were then melted under vacuum. After the melting, an argon atmosphere was created in the furnace, and the molten metal was sucked up through a quartz tube having an inner diameter of 8 mm to obtain a rod-like alloy matrix having a diameter of 8 mm. This matrix was subjected to a rotary water spray method (nozzle diameter = 0.6±0.1 mm, gas pressure = 0.15 MPa, revolution = 500 rpm) described in the Metal Society of Japan, Vol. 46, p. 1095 (1982) to obtain a Raney alloy powder of a quenching method. The same procedure as in Example 1 was carried out to develop the alloy powder, thereby preparing a Raney catalyst of the quenching method, and the hydrogenation activity of acetone was then evaluated. The results are shown in Table 1.

### Comparative Example 2 Al-Ni-Ti (Quenching method)

The same procedure as in Comparative Example 1 was repeated except that the Co metal was replaced with small masses of Ti metal, thereby preparing a modified Raney catalyst of the quenching method, and the hydrogenation activity of acetone was then evaluated. The results are shown in Table 1.

### Comparative Example 3 Al-Ni-Co (Casting method)

Following the same procedure as in Comparative Example 1, metals were melted under vacuum in a high-frequency melting furnace, and the molten metal was then allowed to stand, thereby obtaining an alloy matrix of the casting method. This matrix was ground to obtain a Raney alloy powder of the casting method. The alloy powder was developed in the same manner as in Example 1 to prepare a Raney catalyst of the casting method, and the hydrogenation activity of acetone was then evaluated. The results are shown in Table 1.

### Reference Example 1 Al-Ni (Quenching method)

The same procedure as in Comparative Example 1 was repeated except that no Co metal was added, thereby preparing a Raney catalyst of the quenching method, and the hydrogenation activity of acetone was then evaluated. The results are shown in Table 1.

### Reference Example 2 Al-Ni (Mechanical alloying method)

The same procedure as in Example 1 was repeated except that no Co metal was added, thereby preparing a Raney catalyst of the mechanical alloying method, and the hydrogenation activity of acetone was then evaluated. The results are shown in Table 1.

**Table 1**

| Reaction Rate (-MPa/sec) | | | |
|---|---|---|---|
| | Reaction Temp. 40°C | Reaction Temp. 50°C | Reaction Temp. 60°C |
| Example 1 | 64.2 | --- | --- |
| Example 2 | 93.7 | 95.7 | 114.3 |
| Comp. Ex. 1 | 15.2 | 17.8 | 20.5 |
| Comp. Ex. 2 | 17.1 | 22.2 | 25.5 |
| Comp. Ex. 3 | 8.8 | 11.1 | 13.2 |
| Ref. Ex. 1 | 17.8 | 23.4 | 29.0 |
| Ref. Ex. 2 | 35.8 | --- | --- |

### Example 3 Al-Cu-Co (Mechanical alloying method)

Al, Cu and Co metal powders were placed in a stainless steel ball mill so that the atomic ratio of Al, Cu and Co was 69:30:1, and the same procedure as in Example 1 was then carried out to prepare a modified Raney catalyst of the mechanical alloying method.

The catalytic activity of the catalyst was evaluated on the basis of the synthetic reaction of acrylamide by the hydration of acrylonitrile. 8.5 parts by weight of previously deoxidized acrylonitrile, 55 parts by weight of water and 7 parts by weight of the catalyst were placed in a 100-ml four-necked flask, and reaction was then carried out at 70°C for 1 hour in a nitrogen atmosphere. The results are shown in Table 2.

### Example 4 Al-Cu-Ti (Mechanical alloying method)

The same procedure as in Example 3 was repeated except that the Co metal powder was replaced with Ti metal powder, thereby preparing a modified Raney catalyst of the mechanical alloying method, and the hydration activity of acrylonitrile was then evaluated. The results are shown in Table 2.

### Comparative Example 4 Al-Cu-Co (Quenching method)

The same procedure as in Comparative Example 1 was repeated except that small masses of Al, Cu and Co metals were placed in a Tammann tube so that the atomic ratio of Al, Cu and Co was 69:30:1, thereby preparing a Raney catalyst of the quenching method, and the hydration activity of acrylonitrile was then evaluated in the same manner as in Example 3. The results are shown in Table 2.

### Comparative Example 5 Al-Cu-Ti (Quenching method)

The same procedure as in Comparative Example 4 was repeated except that the Co metal powder was replaced with small masses of Ti metal, thereby preparing a modified Raney catalyst of the quenching method, and the hydration activity of acrylonitrile was then evaluated. The results are shown in Table 2.

### Comparative Example 6 Al-Cu-Ti (Casting method)

Following the same procedure as in Comparative Example 5, metals were melted under vacuum in a high-frequency melting furnace, and the molten metal was then allowed to stand, thereby obtaining an alloy matrix of the casting method. This matrix was ground to obtain a Raney alloy powder of the casting method. The alloy powder was developed in the same manner as in Example 1 to prepare a modified Raney catalyst of the casting method, and the hydration activity of acrylonitrile was then evaluated in the same manner as in Example 3. The results are shown in Table 2.

### Reference Example 3 Al-Cu (Quenching method)

The same procedure as in Comparative Example 4 was repeated except that no Co metal was added, thereby preparing a modified Raney catalyst of the quenching method, and the hydration activity of acrylonitrile was then evaluated. The results are shown in Table 2.

### Reference Example 4 Al-Cu (Mechanical alloying method)

The same procedure as in Example 3 was repeated except that no Co metal powder was added, thereby preparing a modified Raney catalyst of the mechanical alloying method, and the hydration activity of acrylonitrile was then evaluated. The results are shown in Table 2.

**Table 2**

| | Yield of Acrylamide (%) |
|---|---|
| Example 3 | 72.1 |
| Example 4 | 78.8 |
| Comp. Ex. 4 | 42.8 |
| Comp. Ex. 5 | 54.9 |
| Comp. Ex. 6 | 33.5 |
| Ref. Ex. 3 | 38.4 |
| Ref. Ex. 4 | 43.2 |

### Example 5 Al-Cu-V (Mechanical alloying method)

Al, Cu and V metal powders were placed in a stainless steel ball mill so that the atomic ratio of Al, Cu and V was 69:30:1, and the same procedure as in Example 1 was then repeated to prepare a modified Raney Cu catalyst of the mechanical alloying method.

The catalytic activity of the prepared catalyst was evaluated on the basis of the dehydrogenating decomposition reaction activity of methanol. One part by weight of the catalyst was filled into a reaction tube, and methanol was then fed into the reaction tube at a ratio of 1 part by weight every hour by the use of a nitrogen gas as a carrier gas. Reaction was continued in the reaction temperature range of from 240 to 330°C for 1 hour, and unreacted methanol in the outlet gas was then cooled and collected to calculate the methanol reaction ratio. The results are shown in Table 3.

### Example 6 Al-Cu-Pd (Mechanical alloying method)

The same procedure as in Example 5 was repeated except that the V metal powder was replaced with Pd metal powder, thereby preparing a Pd-modified Raney Cu catalyst of the mechanical alloying method, and the dehydrogenating decomposition activity of methanol was then evaluated. The results are shown in Table 3.

### Example 7 Al-Ni-Cu (Mechanical alloying method)

The same procedure as in Example 1 was repeated except that the Co metal powder was replaced with Cu metal powder, thereby preparing a Cu-modified Raney Ni catalyst of the mechanical alloying method, and the dehydrogenating decomposition activity of methanol was then evaluated in the same manner as in Example 5. The results are shown in Table 3.

### Example 8 Al-Ni-V (Mechanical alloying method)

The same procedure as in Example 7 was repeated except that the Cu metal powder was replaced with V metal powder, thereby preparing a V-modified Raney Ni catalyst of the mechanical alloying method, and the dehydrogenating decomposition activity of methanol was then evaluated. The results are shown in Table 3.

### Example 9 Al-Ni-Ti (Mechanical alloying method)

The same procedure as in Example 7 was repeated except that the Cu metal powder was replaced with Ti metal powder, thereby preparing a Ti-modified Raney Ni catalyst of the mechanical alloying method, and the dehydrogenating decomposition activity of methanol was then evaluated. The results are shown in Table 3.

### Comparative Example 7 Al-Cu-V (Quenching method)

The same procedure as in Comparative Example 1 was repeated except that small masses of Al, Cu and V metals were placed in a Tammann tube so that the atomic ratio of Al, Cu and V was 69:30:1, thereby preparing a V-modified Raney Cu catalyst of the quenching method, and the dehydrogenating decomposition activity of methanol was then evaluated in the same manner as in Example 5. The results are shown in Table 4.

### Comparative Example 8 Al-Cu-Pd (Quenching method)

The same procedure as in Comparative Example 7 was repeated except that the V metal was replaced with Pd metal powder, thereby preparing a Pd-modified Raney Cu catalyst of the quenching method, and the dehydrogenating decomposition activity of methanol was then evaluated. The results are shown in Table 4.

### Comparative Example 9 Al-Ni-Cu (Quenching method)

The same procedure as in Comparative Example 1 was repeated except that the Co metal was replaced with Cu metal, thereby preparing a Cu-modified Raney Ni catalyst of the quenching method, and the dehydrogenating decomposition activity of methanol was then evaluated in the same manner as in Example 5. The results are shown in Table 4.

### Comparative Example 10 Al-Ni-V (Quenching method)

The same procedure as in Comparative Example 9 was repeated except that the Cu metal was replaced with V metal, thereby preparing a V-modified Raney Ni catalyst of the quenching method, and the dehydrogenating decomposition activity of methanol was then evaluated. The results are shown in Table 4.

### Comparative Example 11 Al-Ni-Ti (Quenching method)

The same procedure as in Comparative Example 9 was repeated except that the Cu metal was replaced with Ti metal, thereby preparing a Ti-modified Raney Ni catalyst of the quenching method, and the dehydrogenating decomposition activity of methanol was then evaluated. The results are shown in Table 4.

### Comparative Example 12 Al-Cu-V (Casting method)

The same procedure as in Comparative Example 6 was repeated except that the Ti metal was replaced with V metal, thereby preparing a V-modified Raney Cu catalyst of the casting method, and the dehydrogenating decomposition activity of methanol was then evaluated in the same manner as in Example 5. The results are shown in Table 4.

### Reference Example 5 Al-Cu (Casting method)

The same procedure as in Comparative Example 12 was repeated except that no V metal was used, thereby preparing a Raney Cu catalyst of the casting method, and the dehydrogenating decomposition activity of methanol was then evaluated. The results are shown in Table 4.

**Table 3**

| | Reaction Temp. (°C) | Methanol Conversion (%) |
|---|---|---|
| Example 5 | 250 | 30.4 |
| | 278 | 50.4 |
| | 305 | 73.9 |
| | | |
| Example 6 | 246 | 51.2 |
| | 286 | 79.4 |
| | 300 | 100 |
| | | |
| Example 7 | 240 | 46.1 |
| | 265 | 72.6 |
| | 296 | 93.1 |
| | | |
| Example 8 | 240 | 63.5 |
| | 270 | 85.2 |
| | 300 | 89.1 |
| | | |
| Example 9 | 242 | 56.5 |
| | 272 | 75.9 |
| | 302 | 90.1 |

**Table 4**

| | Reaction Temp. (°C) | Methanol Conversion (%) |
|---|---|---|
| Comp. Ex. 7 | 255 | 20.4 |
| | 283 | 31.2 |
| | 310 | 37.4 |
| | | |
| Comp. Ex. 8 | 282 | 34.5 |
| | 308 | 41.3 |
| | | |
| Comp. Ex. 9 | 283 | 34.7 |
| | 310 | 39.5 |
| | | |
| Comp. Ex. 10 | 280 | 36.7 |
| | 309 | 40.7 |
| | | |
| Comp. Ex. 11 | 284 | 29.4 |
| | 312 | 36.0 |
| | | |
| Comp. Ex. 12 | 256 | 11.0 |
| | 320 | 35.9 |
| | | |
| Ref. Ex. 5 | 330 | 56.6 |

## Claims

1. A method for preparing a modified Raney catalyst which comprises the steps of forming, by a mechanical alloying method, a Raney alloy represented by the formula Al-Me-X wherein Me is one metal selected from the group consisting of Ni, Co, Fe, Cu, Pd and Ag; and X is different from Me and is at least one metal selected from the group consisting of Ag, Co, Pt, Ti, V, Cr, Fe, Cu, Zn, Ge, W, Re, Os, Ir, Au, Zr, Nb, Mo, Ru, Rh, Pd, Cd, In, Sn and Sb, and then leaching the Raney alloy.

2. The method according to Claim 1 wherein the group from which Me is selected consists of Cu and Ni, and the group from which X is selected consists of Co, Pd, Ti, V and Cu.

3. A method for hydrogenating a carbonyl compound which comprises a step of using a modified Raney catalyst prepared by the method of Claim 1 or Claim 2.

4. The method according to Claim 3 wherein Me is Ni, and X is at least one of Co and Ti.

5. A method for hydrating a nitrile which comprises a step of using a modified Raney catalyst prepared by the method of Claim 1 or Claim 2.

6. The method according to Claim 5 wherein Me is Cu, and X is at least one of Co and Ti.

7. A method for dehydrogenating an alcohol which comprises a step of using a modified Raney catalyst prepared by the method of Claim 1 or Claim 2.

8. The method according to Claim 7 wherein the group from which Me is selected consists of Cu and Ni, and the group from which X is selected consists of Pd, Ti, V and Cu.

## Patentansprüche

1. Verfahren zur Herstellung eines modifizierten Raney-Katalysators, umfassend die Schritte durch ein mechanisches Legierungsverfahren Herstellen einer durch die Formel Al-Me-X wiedergegebenen Raney-Legierung, wobei Me ein Metall darstellt, ausgewählt aus der Gruppe, bestehend aus Ni, Co, Fe, Cu, Pd und Ag, und X sich von Me unterscheidet und mindestens ein Metall darstellt, ausgewählt aus der Gruppe, bestehend aus Ag, Co, Pt, Ti, V, Cr, Fe, Cu, Zn, Ge, W, Re, Os, Ir, Au, Zr, Nb, Mo, Ru, Rh, Pd, Cd, In, Sn und Sb und anschließend Auslaugen der Raney-Legierung.

2. Verfahren nach Anspruch 1, wobei die Gruppe, aus der Me ausgewählt ist, aus Cu und Ni besteht und die Gruppe, aus der X ausgewählt ist, aus Co, Pd, Ti, V und Cu besteht.

3. Verfahren zum Hydrieren einer Carbonylverbindung, die einen Schritt der Anwendung eines modifizierten durch das Verfahren nach Anspruch 1 oder Anspruch 2 hergestellten Raney-Katalysators umfaßt.

4. Verfahren nach Anspruch 3, wobei Me Ni darstellt und X mindestens eines von Co und Ti ist.

5. Verfahren zur Nitrilverseifung, das einen Schritt der Anwendung eines modifizierten durch das Verfahren nach Anspruch 1 oder Anspruch 2 hergestellten Raney-Katalysators umfaßt.

6. Verfahren nach Anspruch 5, wobei Me Cu darstellt und X mindestens eines von Co und Ti ist.

7. Verfahren zum Dehydrieren eines Alkohols, das einen Schritt der Anwendung eines modifizierten durch das Verfahren nach Anspruch 1 oder Anspruch 2 hergestellten Raney-Katalysators umfaßt.

8. Verfahren nach Anspruch 7, wobei die Gruppe, aus der Me ausgewählt ist, aus Cu und Ni besteht und die Gruppe, aus der X ausgewählt ist, aus Pd, Ti, V und Cu besteht.

## Revendications

1. Méthode pour préparer un catalyseur modifié de Raney qui comprend les étapes de former, par une méthode d'alliage mécanique, un alliage de Raney représenté par la formule Al-Me-X, où Me est un métal sélectionné dans le groupe consistant en Ni, Co, Fe, Cu, Pd et Ag ; et X est différent de Me et est au moins un métal sélectionné dans le groupe consistant en Ag, Co, Pt, Ti, V, Cr, Fe, Cu, Zn, Ge, W, Re, Os, Ir, Au, Zr, Nb, Mo, Ru, Rh, Pd, Cd, In, Sn et Sb puis lessiver l'alliage de Raney.

2. Méthode selon la revendication 1, où le groupe d'où Me est sélectionné consiste en Cu et Ni et le groupe d'où X est sélectionné consiste en Co, Pd, Ti, V et Cu.

3. Méthode pour hydrogéner un composé de carbonyle qui comprend une étape d'utiliser un catalyseur modifié de Raney préparé par la méthode de la revendication 1 ou de la revendication 2.

4. Méthode selon la revendication 3, où Me est Ni et X est au moins l'un de Co et Ti.

5. Méthode pour hydrater un nitrile qui comprend une étape d'utiliser un catalyseur modifié de Raney préparé par la méthode de la revendication 1 ou de la revendication 2.

6. Méthode selon la revendication 5, où Me est Cu et X est au moins l'un de Co et Ti.

7. Méthode pour déshydrogéner un alcool, qui comprend une étape d'utiliser un catalyseur modifié de Raney préparé par la méthode de la revendication 1 ou 2.

8. Méthode selon la revendication 7, où le groupe d'où Me est sélectionné consiste en Cu et Ni, et le groupe d'où X est sélectionné consiste en Pd, Ti, V et Cu.
